# EUROPEAN PATENT APPLICATION

(11) **EP 3 336 936 A1**
(43) Date of publication of application: **20.06.2018**
(21) Application number: 17207374.4
(22) Date of filing: 14.12.2017
(51) Int. Cl.: H01M 4/133, H01M 4/134, H01M 4/1393, H01M 4/1395, H01M 4/36, H01M 4/38, H01M 4/587, H01M 10/0525

(54) **METHOD FOR PREPARING NEGATIVE ELECTRODE OF LITHIUM ION BATTERY AND LITHIUM ION BATTERY**

(30) Priority: 16.12.2016 CN 201611167522
(71) Applicant: Optimum Battery Co., Ltd., Shenzhen City, Guangdong 518118 (CN)
(72) Inventor: YANG, Guo long, Shenzhen, Guangdong 518118 (CN)
(74) Representative: Fry, Emma Leland

(57) **Abstract**

The present application provides a method for preparing negative electrode of lithium ion battery. The negative electrode prepared according to the present application has large specific surface area, good chemical stability and controllable volume change. The present application also provides a lithium ion battery, including a shell having an opening at one end, a winding core positioned in the shell, electrolyte received in the shell and immersing the winding core, and a cap cover positioned in the opening for enclosing the opening, wherein the winding core comprising a positive electrode, separators and a negative electrode prepared according to the present application. The lithium ion battery provided by the present application including the negative electrode, which contains silicon-carbon composite coated with carbon aerogel, has small internal resistance, good rate capability and high power density.

## Description

### BACKGROUND OF THE INVENTION

### Field of the Invention

The present application generally relates to lithium ion batteries and, more particularly, to a method for preparing negative electrode of lithium ion battery and a lithium ion battery.

### Description of the Related Art

A negative electrode is an important part of lithium ion battery. Carbon-based materials have become the most widely used negative electrode material due to advantages of large specific surface area, good conductivity, low cost, large porosity and simple preparation. At present, a main negative electrode material for lithium ion battery is graphite, however, the theoretical capacity of graphite is 372mAh/g and the practical capacity of graphite has reached 370mAh/g, therefore it is difficult for graphite to obtain a breakthrough in practical capacity because of its low theoretical capacity.

Compared with graphite, silicon has a higher theoretical capacity (4200mAh/g) and a lower delithination potential (<0.5V), which make silicon the most potential negative electrode material for lithium ion battery to replace graphite. However, volume expansion of the negative electrode made of silicon as an active material could reach 360% after charging and discharging, resulting in problems of disintegration of silicon particles, poor contact between the active material and conductive agent, and repetitive growth of solid electrolyte interphase which may cause the consumption of electrolyte and poor cycling performance.

In view of the foregoing, what is needed, therefore, is to provide a method for preparing negative electrode of lithium ion battery and a lithium ion battery, so as to overcome the defects as detailed above.

### SUMMARY OF THE INVENTION

One object of the present application is to provide a method for preparing negative electrode of lithium ion battery capable of limiting the volume expansion of silicon and to provide a lithium ion battery including the negative electrode prepared according to the method for preparing negative electrode of lithium ion battery of the present application. The lithium ion battery provided by the present application has characteristics of small internal resistance, good rate performance, long cycle life and high power density.

According to one embodiment of the present application, a method for preparing negative electrode of lithium ion battery including the steps of:
1) dispersing 2, 4-dihydroxybenzoic acid and K₂CO₃ in deionized water and stirring until 2, 4-dihydroxybenzoic acid and K₂CO₃ are completely reacted, and obtaining a clarified solution;
2) adding formaldehyde and K₂CO₃ into the clarified solution of step 1), reacting at room temperature for 5-7 hours and obtaining a faint yellow solution, wherein reaction takes place under sealed conditions;
3) adding a surfactant solution, deionized water and nano-silicon powders into the faint yellow solution of step 2), stirring to carry out a sol-gel reaction and reacting at room temperature for 3 days, and obtaining a sol-gel product;
4) centrifuging the sol-gel product of step 3) and washing by acetone solution, and then extracting by acetone for 1 day, and obtaining an extraction product;
5) drying the extraction product at 250°C under the protection of an inert gas and taking petroleum ether as a replacement medium for supercritical drying, and obtaining a dried product;
6) carbonizing the dried product of step 5) at 900-1200 °C under the protection of the inert gas, and obtaining a silicon-carbon composite coated with carbon aerogel; and
7) mixing the silicon-carbon composite of step 6), a conductive agent, a binder and solvents to form a slurry, coating the slurry on two opposite surfaces of a copper foil, and obtaining a negative electrode.

The negative electrode prepared according to the present application has large specific surface area, good chemical stability and controllable volume change.

One embodiment of the present application provides a lithium ion battery including a shell having an opening at one end, a winding core positioned in the shell, electrolyte received in the shell and immersing the winding core, and a cap cover positioned in the opening for enclosing the opening; the winding core comprising a positive electrode, separators and a negative electrode prepared according to the method for preparing negative electrode of lithium ion battery of the present application.

The lithium ion battery provided by the present application including the negative electrode, which contains silicon-carbon composite coated with carbon aerogel, has small internal resistance, good rate capability and high power density.

### BRIEF DESCRIPTION OF THE DRAWINGS

FIG. 1 depicts SEM images of carbon aerogel prepared according to a first embodiment of the present application;
FIG. 2 depicts the forming mechanism of carbon aerogel of the present application;
FIG. 3 depicts a schematic view of the negative electrode of the present application;
FIG. 4 depicts a schematic view of the lithium ion battery of the present application; and
FIG. 5 depicts 3C cycle diagrams of lithium ion batteries prepared according to Example 1, Example 2 and Example 3 of the present application.

### DETAILED DESCRIPTION OF THE PREFERRED EMBODIMENTS

In order that the objects, technical solution and technical effects of the present application can be understood more clearly, the present application will be described in more detail with reference to the accompanying drawings and examples. It should be understood that the specific examples described herein are illustrative only and are not intended to limit the present application.

According to one embodiment of the present application, a method for preparing negative electrode of lithium ion battery including the steps of:
1) dispersing 2, 4-dihydroxybenzoic acid and K₂CO₃ in deionized water and stirring until 2, 4-dihydroxybenzoic acid and K₂CO₃ are completely reacted, and obtaining a clarified solution;
2) adding formaldehyde and K₂CO₃ into the clarified solution of step 1), reacting at room temperature for 5-7 hours and obtaining a faint yellow solution, wherein reaction takes place under sealed conditions;
3) adding a surfactant solution, deionized water and nano-silicon powders into the faint yellow solution of step 2), stirring to carry out a sol-gel reaction and reacting at room temperature for 3 days, and obtaining a sol-gel product;
4) centrifuging the sol-gel product of step 3) and washing by acetone solution, and then extracting by acetone for 1 day, and obtaining an extraction product;
5) drying the extraction product at 250 °C under the protection of an inert gas and taking petroleum ether as a replacement medium for supercritical drying, and obtaining a dried product;
6) carbonizing the dried product of step 5) at 900-1200 °C under the protection of the inert gas, and obtaining a silicon-carbon composite coated with carbon aerogel; and
7) mixing the silicon-carbon composite of step 6), a conductive agent, a binder and solvents to form a slurry, coating the slurry on two opposite surfaces of a copper foil 1, and obtaining a negative electrode 11.

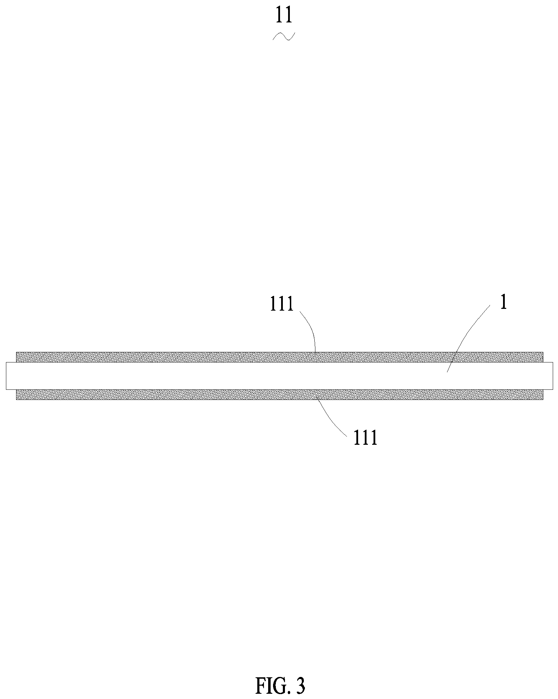

Referring to FIG. 3, the slurry including the mixture of the silicon-carbon composite, a conductive agent, a binder and solvents may form solid layers 111 on two opposite surfaces of the copper foil 1 after drying.

Specifically, in step 1), a molar ratio of 2, 4-dihydroxybenzoic acid to K₂CO₃ is 1:0.5.

Specifically, in step 1), a concentration of 2, 4-dihydroxybenzoic acid in deionized water is 0.8-1.2mol/L.

Specifically, a molar ratio of formaldehyde in step 2) to 2, 4-dihydroxybenzoic acid in step 1) is 2:1.

Specifically, a molar ratio of K₂CO₃ in step 2) to 2, 4-dihydroxybenzoic acid in step 1) is 0.01:1.

Specifically, in step 3), the surfactant solution contains SPAN80 and cyclohexane, and a volume ratio of SPAN80 to cyclohexane is 1:50.

Specifically, in step 3), a volume ratio of the surfactant solution to deionized water is (3-4): 1.

Specifically, a molar ratio of nano-silicon powders in step 3) to 2, 4-dihydroxybenzoic acid in step 1) is (0.5-1):1.

Specifically, in step 3), the stirring speed is 300-500rpm.

Specifically, in step 5), drying the extraction product and the petroleum ether in a sealed system and maintaining the system pressure above 7MPa.

Specifically, in step 5), drying the extraction product and petroleum ether at 250 °C for 90 minutes and a rate of temperature rising from room temperature to 250 °C is 5-10 °C /min.

Specifically, in step 6), a flow rate of the inert gas is 200-500mL/min.

Specifically, in step 6), a rate of temperature rising from room temperature to 900-1200 °C is 3-5 °C/min.

In the method for preparing negative electrode of lithium ion battery, 2, 4-dihydroxybenzoic acid and formaldehyde act as precursors of the sol-gel reaction, nano-silicon powders act as nucleuses, SPAN80 and cyclohexane act as surfactant. The extraction product is dried by supercritical drying method so as to obtain a high porosity and ultra-low density material (i.e. the dried product). Eventually, the silicon-carbon composite coated with carbon aerogel could be obtained after high-temperature carbonization.

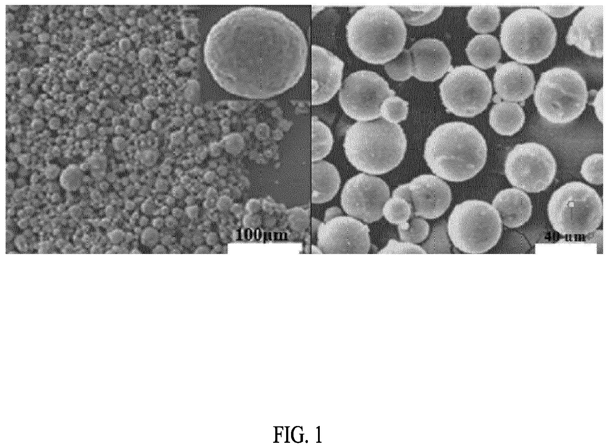

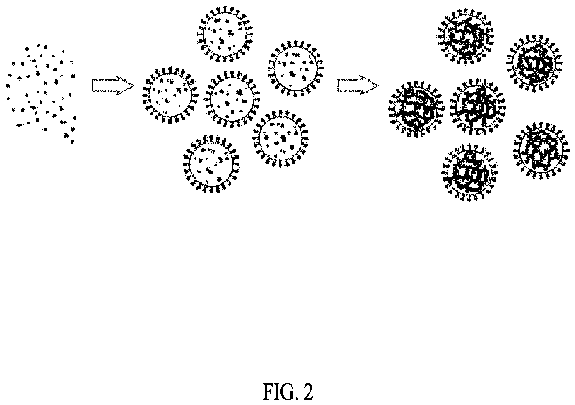

Referring to FIG. 1 and FIG. 2, the carbon aerogel is a porous material with nanometer networks and the networks are cross-linked with each other, therefore, the nano-silicon powders could be locked in the networks. During charging and discharging, lithium ions may embed through pores and combine with the nano-silicon powders, so as to improve the capacity of the silicon-carbon composite. In addition, during charging and discharging, the networks of the carbon aerogel have a cushioning effect on the nano-silicon powders which could prevent the disintegration of silicon particles.

The negative electrode 11 prepared according to the present application has large specific surface, good chemical stability and controllable volume change.

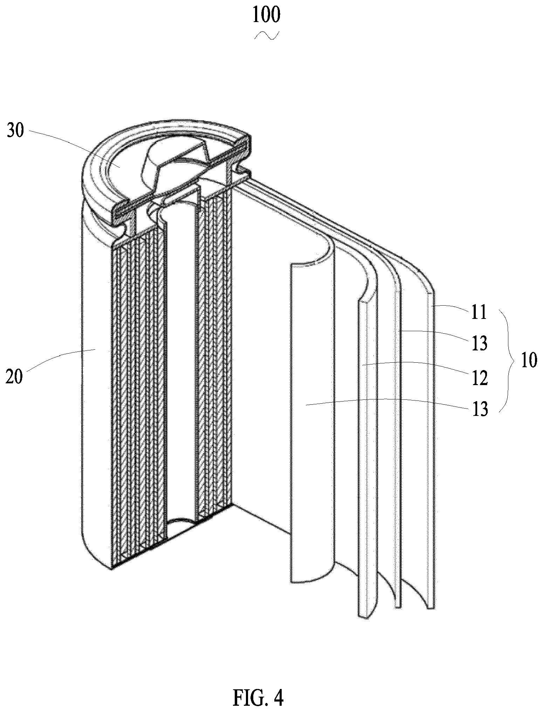

Referring to FIG. 4, one embodiment of the present application provides a lithium ion battery 100 including a shell 20 having an opening at one end, a winding core 10 positioned in the shell 20, electrolyte received in the shell 20 and immersing the winding core 10, and a cap cover 30 positioned in the opening for enclosing the opening; the winding core 10 comprising a positive electrode 12, separators 13 and a negative electrode 11 prepared according to the method for preparing negative electrode of lithium ion battery of the present application.

Specifically, the positive electrode 12 comprising an aluminum foil and a slurry including the mixture of a positive active material, a conductive agent, a binder and solvents coated on two opposite surfaces of the aluminum foil.

Specifically, the positive active material is selected from a group consisting of LiCoO₂, LiMn₂O₄, LiFePO₄ and LiCo_{1-x-y}NiₓMn_{y}O₂; and x<1, y<1, x+y<1.

The lithium ion battery 100 provided by the present application including the negative electrode 11, which contains silicon-carbon composite coated with carbon aerogel, has small internal resistance, good rate capability and high power density.

### Example 1:

1. dispersing 1mol 2, 4-dihydroxybenzoic acid and 0.5mol K₂CO₃ in 1L deionized water and stirring until 2, 4-dihydroxybenzoic acid and K₂CO₃ are completely reacted to obtain a clarified solution;
2. adding 2mol formaldehyde and 0.01mol K₂CO₃ into the clarified solution and reacting at room temperature for 7 hours to obtain a faint yellow solution, wherein reaction takes place under sealed conditions;
3. adding a surfactant solution of 3L, deionized water and 0.6mol nano-silicon powders into the faint yellow solution, wherein the surfactant solution is made up of SPAN80 and cyclohexane at a volume ratio of 1:50; stirring at a speed of 400rmp to carry out a sol-gel reaction and reacting at room temperature for 3 days to obtain a sol-gel product;
4. centrifuging the sol-gel product and washing by acetone solution, and then extracting by acetone for 1 day to obtain an extraction product;
5. drying the extraction product at 250°C in a sealed system under the protection of an inert gas and taking petroleum ether as a replacement medium to obtain a dried product, wherein the pressure of the sealed system should be maintained above 7MPa, the rate of temperature rising from room temperature to 250 °C is 5 °C/min and the time of drying at 250 °C is 90 minutes;
6. carbonizing the dried product at 1000 °C under the protection of the inert gas to obtain a silicon-carbon composite coated with carbon aerogel, wherein the flow rate of the inert gas is 300mL/min and the rate of temperature rising from room temperature to 1000 °C is 5 °C /min; and
7. mixing the silicon-carbon composite, a conductive agent, a binder and solvents to form a slurry and coating the slurry on two opposite surfaces of a copper foil 1 to obtain a negative electrode 11; using LiFePO₄ as a positive active material and mixing LiFePO₄, a conductive agent, a binder and solvents to form another slurry and coating the another slurry on two opposite surfaces of an aluminum foil to obtain a positive electrode 12; winding the negative electrode 11, the positive electrode 12 and separators 13 into a roll and sealing the roll into a shell 20 after injecting electrolyte to obtain a lithium ion battery 100.

### Example 2:

1. dispersing 0.5mol 2, 4-dihydroxybenzoic acid and 0.25mol K₂CO₃ in 1L deionized water and stirring until 2, 4-dihydroxybenzoic acid and K₂CO₃ are completely reacted to obtain a clarified solution;
2. adding 1mol formaldehyde and 0.005mol K₂CO₃ into the clarified solution and reacting at room temperature for 5 hours to obtain a faint yellow solution, wherein reaction takes place under sealed conditions;
3. adding a surfactant solution of 1.5L, deionized water and 0.4mol nano-silicon powders into the faint yellow solution, wherein the surfactant solution is made up of SPAN80 and cyclohexane at a volume ratio of 1:50; stirring at a speed of 500rmp to carry out a sol-gel reaction and reacting at room temperature for 3 days to obtain a sol-gel product;
4. centrifuging the sol-gel product and washing by acetone solution, and then extracting by acetone for 1 day to obtain an extraction product;
5. drying the extraction product at 250 °C in a sealed system under the protection of an inert gas and taking petroleum ether as a replacement medium to obtain a dried product, wherein the pressure of the sealed system should be maintained above 7MPa, the rate of temperature rising from room temperature to 250°C is 10 °C/min and the time of drying at 250°C is 90 minutes;
6. carbonizing the dried product at 1000 °C under the protection of the inert gas to obtain a silicon-carbon composite coated with carbon aerogel, wherein the flow rate of the inert gas is 400mL/min and the rate of temperature rising from room temperature to 1000 °C is 5 °C /min; and
7. mixing the silicon-carbon composite, a conductive agent, a binder and solvents to form a slurry and coating the slurry on two opposite surfaces of a copper foil 1 to obtain a negative electrode 11; using LiFePO₄ as a positive active material and mixing LiFePO₄, a conductive agent, a binder and solvents to form another slurry and coating the another slurry on two opposite surfaces of an aluminum foil to obtain a positive electrode 12; winding the negative electrode 11, the positive electrode 12 and separators 13 into a roll and sealing the roll into a shell 20 after injecting electrolyte to obtain a lithium ion battery 100.

### Example 3:

1. dispersing 0.8mol 2, 4-dihydroxybenzoic acid and 0.4mol K₂CO₃ in 1L deionized water and stirring until 2, 4-dihydroxybenzoic acid and K₂CO₃ are completely reacted to obtain a clarified solution;
2. adding 1.6mol formaldehyde and 0.008mol K₂CO₃ into the clarified solution and reacting at room temperature for 6 hours to obtain a faint yellow solution, wherein reaction takes place under sealed conditions;
3. adding a surfactant solution of 3L, deionized water and 0.8mol nano-silicon powders into the faint yellow solution, wherein the surfactant solution is made up of SPAN80 and cyclohexane at a volume ratio of 1:50; stirring at a speed of 300rmp to carry out a sol-gel reaction and reacting at room temperature for 3 days to obtain a sol-gel product;
4. centrifuging the sol-gel product and washing by acetone solution, and then extracting by acetone for 1 day to obtain an extraction product;
5. drying the extraction product at 250 °C in a sealed system under the protection of an inert gas and taking petroleum ether as a replacement medium to obtain a dried product, wherein the pressure of the sealed system should be maintained above 7MPa, the rate of temperature rising from room temperature to 250 °C is 5 °C/min and the time of drying at 250 °C is 90 minutes;
6. carbonizing the dried product at 1000 °C under the protection of the inert gas to obtain a silicon-carbon composite coated with carbon aerogel, wherein the flow rate of the inert gas is 350mL/min and the rate of temperature rising from room temperature to 1000 °C is 4 °C/min; and
7. mixing the silicon-carbon composite, a conductive agent, a binder and solvents to form a slurry and coating the slurry on two opposite surfaces of a copper foil 1 to obtain a negative electrode 11; using LiFePO₄ as a positive active material and mixing LiFePO₄, a conductive agent, a binder and solvents to form another slurry and coating the another slurry on two opposite surfaces of an aluminum foil to obtain a positive electrode 12; winding the negative electrode 11, the positive electrode 12 and separators 13 into a roll and sealing the roll into a shell 20 after injecting electrolyte to obtain a lithium ion battery 100.

The thickness expansion rates of the negative electrodes prepared according to examples of the present application after different charging and discharging cycles are shown in Tab. 1.

**Tab. 1 the thickness expansion rates of negative electrodes after different charging and discharging cycles**

| Cycles index | 1st | 2nd | 5th | 10th | 20th |
|---|---|---|---|---|---|
| Example 1 | 105.1% | 107.7% | 111.4% | 114.1% | 113.7% |
| Example 2 | 108.9% | 112.3% | 117.6% | 120.3% | 121.0% |
| Example 3 | 110.7% | 113.4% | 119.3% | 124.1% | 125.7% |

As shown in Tab. 1, the thickness expansion rates of the negative electrodes prepared according to the examples of the present application are still smaller than 130% after 20 charging and discharging cycles. Compared with the existing silicon-carbon material, the silicon-carbon composite coated with carbon aerogel prepared according to the present application has much smaller expansion rate and better properties.

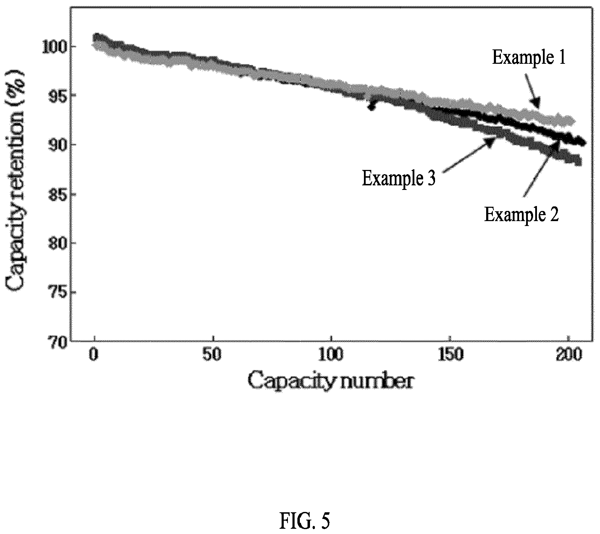

FIG. 5 depicts 3C cycle diagrams of lithium ion batteries prepared according to Example 1, Example 2 and Example 3 of the present application. As shown in FIG. 5, the lithium ion batteries prepared according to the present application have good cycle performance and the capacity retention rates are higher than 90% after 200 charging and discharging cycles.

It should be understood that the above examples are only used to illustrate the technical concept and feature of the present application, and the purpose to thereof is familiarize the person skilled in the art to understand the content of the present application and carry it out, which cannot restrict the protection scope of the present invention based on above. Any equivalent transformation or modification made in the spirit of the present invention should all be included within the protection scope of the present application.

## Claims

1. A method for preparing negative electrode of lithium ion battery, comprising the steps of:
1) dispersing 2, 4-dihydroxybenzoic acid and K₂CO₃ in deionized water and stirring until 2, 4-dihydroxybenzoic acid and K₂CO₃ are completely reacted, and obtaining a clarified solution;
2) adding formaldehyde and K₂CO₃ into the clarified solution of step 1), reacting at room temperature for 5-7 hours and obtaining a faint yellow solution, wherein reaction takes place under sealed conditions;
3) adding a surfactant solution, deionized water and nano-silicon powders into the faint yellow solution of step 2), stirring to carry out a sol-gel reaction and reacting at room temperature for 3 days, and obtaining a sol-gel product;
4) centrifuging the sol-gel product of step 3) and washing by acetone solution, and then extracting by acetone for 1 day, and obtaining an extraction product;
5) drying the extraction product at 250 °C under the protection of an inert gas and taking petroleum ether as a replacement medium for supercritical drying, and obtaining a dried product;
6) carbonizing the dried product of step 5) at 900-1200 °C under the protection of the inert gas, and obtaining a silicon-carbon composite coated with carbon aerogel; and
7) mixing the silicon-carbon composite of step 6), a conductive agent, a binder and solvents to form a slurry, coating the slurry on two opposite surfaces of a copper foil (1), and obtaining a negative electrode (11).

2. The method for preparing negative electrode of lithium ion battery according to claim 1, wherein a molar ratio of 2, 4-dihydroxybenzoic acid to K₂CO₃ in step 1) is 1:0.5.

3. The method for preparing negative electrode of lithium ion battery according to claim 2, wherein a concentration of 2, 4-dihydroxybenzoic acid in deionized water of step 1) is 0.8-1.2mol/L.

4. The method for preparing negative electrode of lithium ion battery according to claim 1, wherein a molar ratio of formaldehyde in step 2) to 2, 4-dihydroxybenzoic acid in step 1) is 2:1.

5. The method for preparing negative electrode of lithium ion battery according to claim 1, wherein a molar ratio of K₂CO₃ in step 2) to 2, 4-dihydroxybenzoic acid in step 1) is 0.01:1.

6. The method for preparing negative electrode of lithium ion battery according to claim 1, wherein the surfactant solution in step 3) contains SPAN80 and cyclohexane and a volume ratio of SPAN80 to cyclohexane is 1:50.

7. The method for preparing negative electrode of lithium ion battery according to claim 1, wherein a volume ratio of the surfactant solution to deionized water in step 3) is (3-4): 1.

8. The method for preparing negative electrode of lithium ion battery according to claim 1, wherein a molar ratio of nano-silicon powders in step 3) to 2, 4-dihydroxybenzoic acid in step 1) is (0.5-1):1.

9. The method for preparing negative electrode of lithium ion battery according to claim 1, wherein the stirring speed in step 3) is 300-500rpm.

10. The method for preparing negative electrode of lithium ion battery according to claim 1, wherein drying the extraction product and the petroleum ether of step 5) in a sealed system and maintaining the system pressure above 7MPa.

11. The method for preparing negative electrode of lithium ion battery according to claim 10, wherein drying the extraction product and petroleum ether in step 5) at 250 °C for 90 minutes and a rate of temperature rising from room temperature to 250°C is 5-10 °C/min.

12. The method for preparing negative electrode of lithium ion battery according to claim 1, wherein a flow rate of the inert gas in step 6) is 200-500mL/min.

13. The method for preparing negative electrode of lithium ion battery according to claim 12, wherein a rate of temperature rising from room temperature to 900-1200 °C in step 6) is 3-5 °C/min.

14. A lithium ion battery (100), comprising a shell (20) having an opening at one end, a winding core (10) positioned in the shell (20), electrolyte received in the shell (20) and immersing the winding core (10), and a cap cover (30) positioned in the opening for enclosing the opening; the winding core (10) comprising a positive electrode (12), separators (13) and a negative electrode (11) prepared according to claim 1.

15. The lithium ion battery of claim 14, wherein the positive electrode comprising an aluminum foil and a slurry including the mixture of a positive active material, a conductive agent, a binder and solvents coated on two opposite surfaces of the aluminum foil.

16. The lithium ion battery of claim 15, wherein the positive active material is selected from a group consisting of LiCoO₂, LiMn₂O₄, LiFePO₄ and LiCo_{1-x-y}NiₓMn_{y}O₂; and x<1, y<1, x+y<1.
